(19) Europäisches Patentamt

European Patent Office

Office européen des brevets

(11) **EP 1 580 407 B1**

(12) **EUROPEAN PATENT SPECIFICATION**

(45) Date of publication and mention
of the grant of the patent:
**27.12.2006 Bulletin 2006/52**

(51) Int Cl.:
*F01L 13/00* (2006.01)    *F02D 13/00* (2006.01)
*F01L 1/26* (2006.01)

(21) Application number: **04076468.0**

(22) Date of filing: **17.05.2004**

(54) **Method for detection failure in a cam profile switching system**

Fehlererkennungsverfahren für ein Nockenprofilwechselsystem

Procédé de détection de dysfonctionnement dans un système pour le changement du profil de came

(84) Designated Contracting States:
**DE GB SE**

(30) Priority: **26.03.2004 EP 04007313**

(43) Date of publication of application:
**28.09.2005 Bulletin 2005/39**

(73) Proprietor: **Ford Global Technologies, LLC.
Dearborn, MI 48126 (US)**

(72) Inventors:
• **Stotsky, Alexander
422 52 Hisings Backa (SE)**
• **Eriksson, Sören
442 90 Kungälv (SE)**

(74) Representative: **Ekström, Nils
Albihns Göteborg AB
P.O. Box 142
401 22 Göteborg (SE)**

(56) References cited:
**EP-A- 1 103 707        US-A- 5 495 830
US-A- 5 549 080        US-A- 6 006 152**

## Description

TECHNICAL FIELD

The invention relates to a method for detection failure in a cam profile switching system according to the preamble of claim 1. The method is used on internal combustion engine provided with an even number of cylinders constituting two separate groups of cylinders, a first switching means responsible for performing cam profile switching on the first group of cylinders and a second switching means responsible for performing cam profile switching on the second group of cylinders. Furthermore the ignition timing of the combustion engine must be arranged such that ignitions in the individual cylinders of the first group sequentially follows after each other without interjacent ignitions in the second group and that ignitions in the individual cylinders of the second group sequentially follows after each other without interjacent ignitions in the first group.

BACKGROUND ART

Cam Profile Switching (CPS) technology has significant effect on drivability, exhaust emissions and fuel consumption. New legislative requirements for the exhaust gas emissions regulations imposed recently by the State of California and the Environmental Protection Agency demand the ability to conduct a continuous monitoring of the state of CPS (Cam Profile Switching System). This, in its turn, requires to have an effective diagnostic method for identification of the system failure. The valve lift event can not be directly measured and special diagnostic algorithms, based on indirect information about the valve lift, are required to identify a failure in the system.

Several methods which allow detecting the CPS state are known. The first one is based on the difference in the air charge inducted in the cylinders for different lifts. The inducted air charge measured by Manifold Air Flow (MAF) sensor is compared with the air charge model based on the measured position of the throttle flap, intake manifold pressure and engine speed. The CPS state is associated with the error between measured and modelled air charge, US 6213 068. The drawback of the method described in US 6213 068 is that the method does not allow the cylinder individual failure detection. It is furthermore not suitable for the detection of the failure of a one bank either due to the relatively small difference in volumetric efficiency for the case of a single Bank failure.

Another method is based on the combustion state monitoring using fluctuations of the engine speed. The method is based on the fact that the combustion state changes considerably during shifting, US 6 006 152. The invention uses the technique of the combustion state monitoring via irregularities of the engine speed. Irregularities are associated with the CPS state. The method allows the cylinder individual failure detection. The method uses the torque estimation technique which is well known in the literature devoted to the combustion efficiency monitoring functions.

Another group of methods proposes to associate the CPS state with the fluctuations of the intake manifold pressure signal. The closest invention which proposes to recover the intake valve timing information from the pressure signal is disclosed in the US 5495830. The method for control and monitoring of the check valves is described in US 5495830. Intake valve closing events which are determined via the pressure change allow to estimate an amount of the backflow into the intake runner where the check valve is controlled to minimize the backflow effect. To realize the algorithms proposed in the US 5495830 the pressure sensor is required in every intake passage which increases the cost of the system.

Moreover, the solution is dedicated to the check valve control and monitoring only. In the present invention we propose to associate the irregularities in the intake manifold pressure signal measured by a single pressure sensor installed in the intake manifold with the CPS state. The method allows the detection of the failure of one bank with one parameter to be calibrated only. Since the method is based on the intake manifold pressure pulsations which come from the intake event the detection method does not depend and therefore is robust with respect to problems in the ignition and fuelling systems.

In the US Patent Application publication 2002 / 0035986 the detection method of the cylinder halting is proposed. The method is based on the intake manifold pressure detecting mean. Under the intake manifold pressure detecting means, the measurements of the intake manifold pressure at every TDC is understood. Detection of the cylinder halting is based on the comparison of the values of the intake manifold pressure for healthy and failed systems for every cylinder. If the amount of change in the output of the detection mechanism exceeds the predetermined value then the system failure is detected. The detection mechanism described above is based on the absolute values of the intake manifold pressure. The absolute values of the intake manifold pressure depend on the throttle position, variable valve timing (VVT) position, variable intake system (VIS) flaps position and some other factors. Thereby the detection method proposed in the US Patent Application publication 2002 / 0035986 requires a lot of calibration for different throttle, VVT and VIS positions. The detection method proposed in this invention is based on the amplitude of the intake manifold pressure signal of a specified frequency, which has information about the CPS failure of one Bank.

Despite the fact that, the engine speed based and intake manifold pressure based CPS failure detection methods allow a cylinder individual failure detection, they suffer from the following drawback. The cylinder individual failure detection is difficult at high rotational speeds. At high rotational speeds the engine speed signal is noise contaminated. The noise is induced by the time interval errors, low frequency oscillations from the powertrain and high frequency oscillations due to the crankshaft torsion. Intake manifold pressure signal is typically sampled with rate of 4 milliseconds and this rate is not sufficient for the cylinder individual detection at high rotational speeds. However, the detection of the failure of the CPS Bank is still possible for the case of ignition synchronized coupling of the CPS oil Banks.

Introduction of the cylinder groups for the CPS Banks coupled according to the firing sequence for trigger window maximization affects the behaviour of the system in the case of the failure of one Bank. The firing sequence for 16 engine is 1-5-3-6-2-4. The Bank "A" includes cylinders 2,4 and 1, while the Bank "B" includes cylinders 5, 3 and 6. The failure of one oil Bank results in appearance of the component whose period is 720 CA degrees in the engine speed. In other words the CPS state information is aliased into the range of lower frequencies. At high engine speeds the information about the CPS state is contaminated by driveline oscillations, however a low frequency component of the engine speed due to the CPS failure is still present in the signal. This allows recovering the CPS state information even at high rotational engine speeds. The difference in the volumetric efficiency between low and high lifts comes from the air pushback effect for low engine speeds and from the difference in valves effective areas at high engine speeds.

The CPS failure detection method proposed in the US 6 006 152 is based on the amplitude information at the engine combustion frequency and is suitable for the detection of the CPS state for low engine speeds only. At high engine speeds (over 3500 rpm) the high resolution engine speed signal includes fluctuations, which occur as a consequence of the combustion process contaminated with the time interval errors, low frequency oscillations from the powertrain and high frequency oscillations due to the crankshaft torsion. The superposition of these events negatively influences the amplitudes on the combustion frequency at high engine speeds and therefore the method proposed in US Patent 6 006 152 fails to detect a CPS failure at high rotational speeds. The method proposed in the present invention associates the CPS state with the amplitude and the phase of a low frequency component (with the period is 720°) of the engine speed signal and allows the CPS failure detection for both low and high rotational speeds.

General drawback of all detection methods which are based on the engine speed is the dependence of the combustion state and hence the quality of the engine signal on ignition and Air/Fuel ratio. In other words any problems in the ignition or fuelling system affect these diagnostic methods which are based on the high resolution engine speed signal. Therefore in the present invention a method which is based on an intake manifold pressure fluctuations is also proposed.

Notice, that the failure of one Bank introduces also a low frequency oscillation in the intake manifold pressure signal, similar to the oscillation in the engine speed signal. Therefore, both engine speed and intake manifold pressure signals can be processed by the same signal processing algorithm which is based on the amplitude and phase information of a certain frequency signal.

## DISCLOSURE OF INVENTION

An object of the invention is to provide a method capable of detecting failure in a cam profile switching system arranged at an internal combustion engine provided with an even number of cylinders constituting two separate groups of cylinders, a first switching means responsible for performing cam profile switching on the first group of cylinders and a second switching means responsible for performing cam profile switching on the second group of cylinders.

This object is achieved by performing the following method steps:

- arranging an ignition sequence such that ignitions in the individual cylinders of the first group sequentially follows after each other without interjacent ignitions in the second group and that ignitions in the individual cylinders of the second group sequentially follows after each other without interjacent ignitions in the first group,
- detecting a combustion related signal,
- determining a component of the detected combustion related signal which has engine cycle periodicity, and
- determining the amplitude value of said component, wherein
- a failure in the cam profile switching system is detected in the event said amplitude exceeds a threshold value.

A theoretical explanation of how the method operates will follow below.

## BRIEF DESCRIPTION OF DRAWINGS

Figure 1 shows a high frequency component of the engine speed on a single engine cycle for the case of the CPS Bank failure when the engine is operated at 1000 rpm,

Figure 2 shows a high frequency component of the engine speed for the case of the Bank CPS failure when the engine is operated at 4000 rpm,

Figure 3 shows a high frequency component of the engine speed for several cycles when the engine is operated at 1000 rpm,

Figure 4 shows measurements of the intake manifold pressure performed with the step 30 CA on a S16 engine when the engine is operated at 1000 rpm,

Figures 5 shows an intake manifold pressure signal as a function of a step number for engine operating at 4000 rpm

Figures 6 shows engine speed signals as a function of a step number for engine operating at 4000 rpm,

Figure 7 shows amplitudes for different frequencies in the engine speed signal for 1000 rpm for healthy and failed systems,

Figure 8 shows amplitudes at different frequencies in the engine speed signal for healthy and failed systems operating at a speed of 4000 rpm.

Figures 9 shows amplitudes for different frequencies for intake manifold pressure signal for healthy and failed systems at 1000 rpm,

Figures 10 shows amplitudes for different frequencies for intake manifold pressure signal for healthy and failed systems at 4000 rpm,

Figure 11 shows Discrete Fourier Transform (DFT) using moving in time window technique for the cycle component of the engine speed signal,

Figure 12 shows engine speed for a single engine cycle for the case of the failure of one Bank,

Figure 13 shows measurements of the engine speed performed with the step 30 CA on the S16 engine,

Figure 14 shows amplitudes of the engine speed for different failures of the CPS Banks at 1000 rpm,

Figure shows 15 amplitudes of the engine speed for different failures of the CPS Banks at 4000 rpm,

Figure 16 shows amplitudes of the intake manifold pressure for different failures of the CPS Banks at 1000 rpm,

Figure 17 shows amplitudes of the intake manifold pressure for different failures of the CPS Banks at 4000 rpm,

Figure 18 shows a combustion engine at which the inventive detection method may operate,

Figures 19, 20 and 21 show schematically, an arrangement at a cylinder in an internal combustion engine,

Figure 22 shows a schematic view of a part of an internal combustion engine according to one embodiment where the detection method according to the invention may be used,

Figure 23 shows a diagram showing critical stages of the valve lift processes of the engine from fig. 22,

Figure 24 shows a schematic view of a part of an internal combustion engine according to another embodiment where the detection method according to the invention may be used,

Figure 25 shows a diagram showing critical stages of the valve lift processes of the engine from fig. 24,

Figure 26 shows a schematic view of a part of an internal combustion engine according a further embodiment where the detection method according to the invention may be used, and

Figure 27 shows a diagram showing critical stages of the valve lift processes of the engine from fig. 26.

MODE(S) FOR CARRYING OUT THE INVENTION

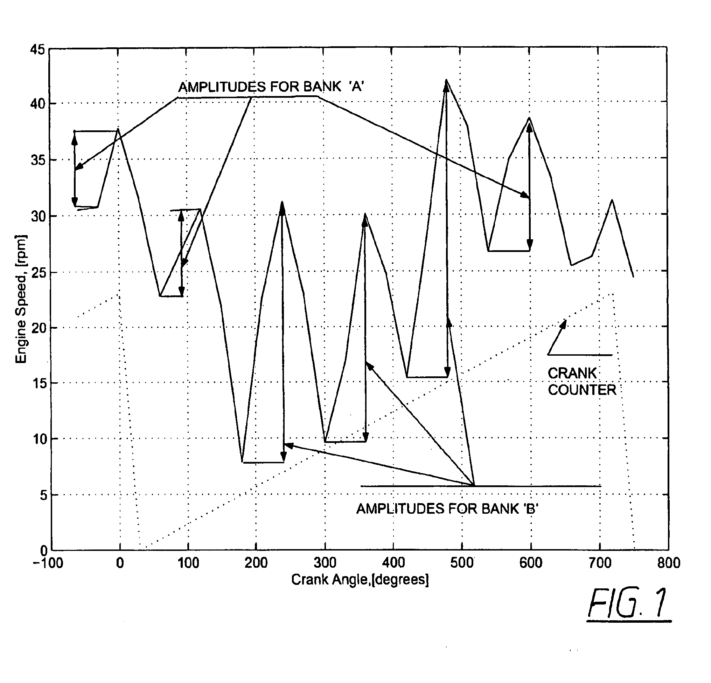

In the Figure 1 a high frequency component of the engine speed on a single engine cycle is plotted for the case of the CPS Bank failure. Measurements are done during a normal driving. The engine is operated at 1000 rpm. It can easily be seen that the CPS failure is recognizable by using amplitudes of the engine speed signal.

The measurements of engine speed are performed with the step 30 CA on an S16 engine. The high frequency component of the engine speed for six cylinder engine is plotted with the solid line. The engine speed is 1000 rpm. Crank Counter is plotted with dashed line.

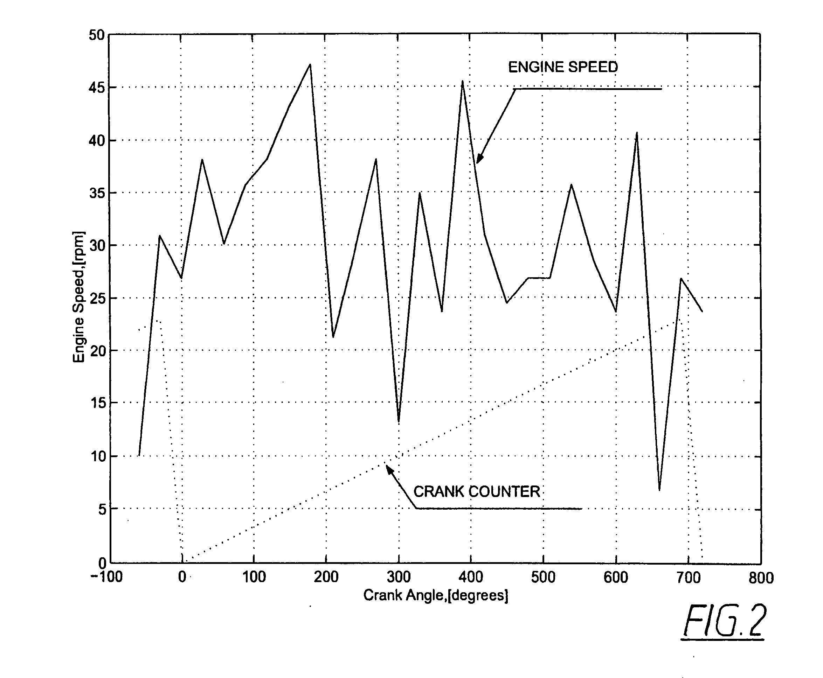

In Figure 2 a high frequency component of the engine speed for the case of the Bank CPS failure is plotted. Engine is operated at 4000 rpm. It can be seen that the combustion amplitudes are hardly recognizable on engine cycle due to the noise in the signal. The amplitude method proposed in the US 6 006 152 is therefore not applicable at high engine speeds. However, the CPS failure detection is possible still, when using a method according to the invention.

The measurements of engine speed are performed with the step 30 CA on the S16 engine. The high frequency component of the engine speed for six cylinder engine is plotted with the solid line. The engine speed is 4000 rpm. Crank Counter is plotted with dashed line.

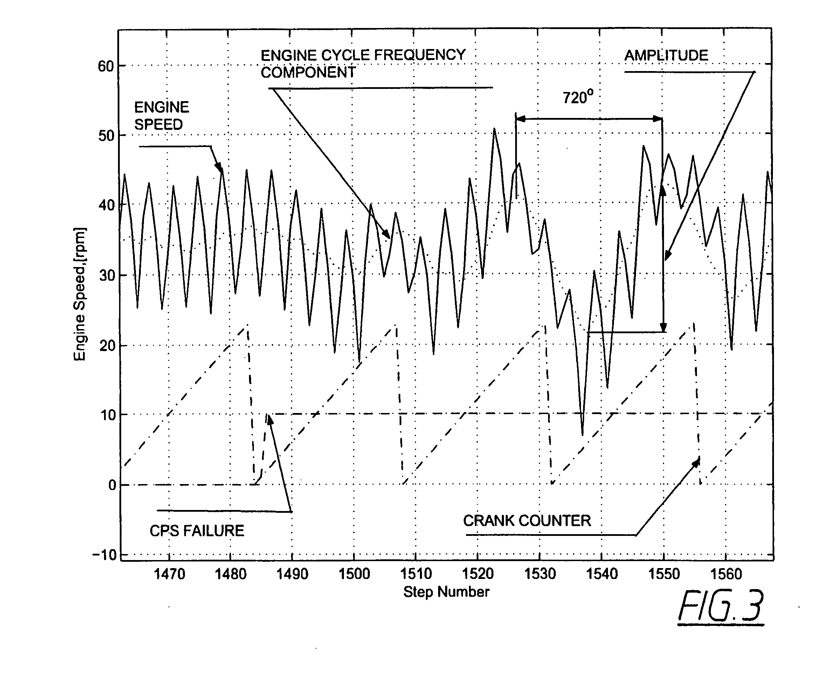

In Figure 3 a high frequency component of the engine speed for several cycles is plotted. It can be seen that the CPS Bank failure amplifies the amplitude of the engine cycle component of the speed with the frequen-

$$\frac{\pi}{360} \frac{rad}{CA\,degree}.$$

Here and below the component of a combustion related signal which can be constituted by the engine speed or alternatively the intake manifold pressure whose periods are equal to the length of the engine cycle, i.e. 720°, is called the engine cycle component of the combustion related signal (that is the engine speed or alternatively the intake manifold pressure).

In figure 3, the measurements of the engine speed are performed with the step 30 CA on the S16 engine. The high frequency component of the engine speed for six cylinder engine is plotted with the solid line. The engine speed is 1000 rpm. Crank Counter is plotted with dash dotted line. Engine cycle component is plotted with dotted line. The signal which initiates the CPS failure is plotted with dashed line.

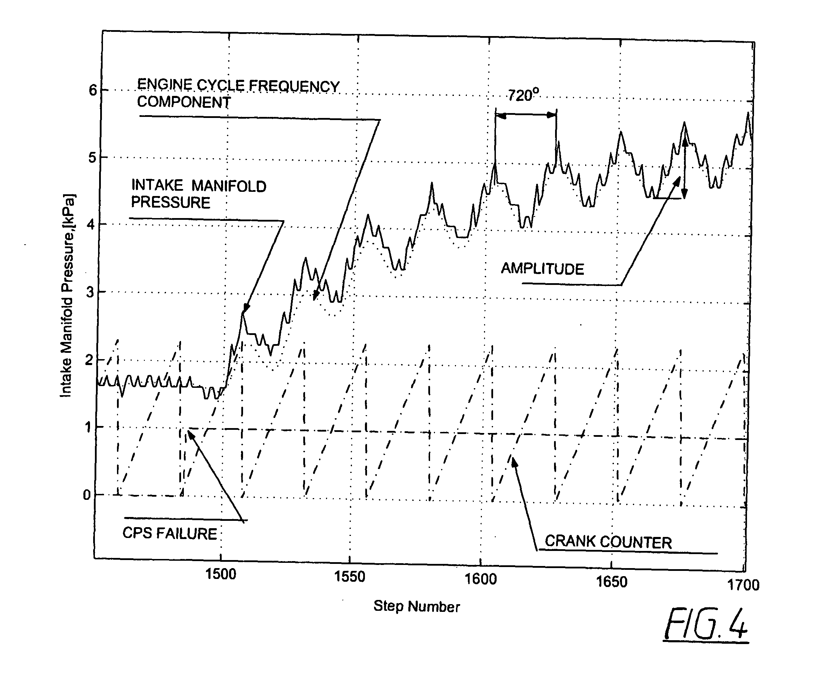

In Figure 4 a pressure signal is plotted as a function of a step number (each step is 30 CA). It is easy to that the CPS failure introduces a periodic oscillations in the pressure signal also. The period of the oscillations is, similar to the engine speed signal, 720 CA degrees.

In figure 4 the measurements of the intake manifold pressure are performed with the step 30 CA on the S16 engine. Intake manifold pressure signal minus 28kPa for six cylinder engine is plotted with the solid line. The engine speed is 1000 rpm. Crank Counter is plotted with dash dotted line. Engine cycle component is plotted with dotted line. The signal which initiates the CPS failure is plotted with dashed line.

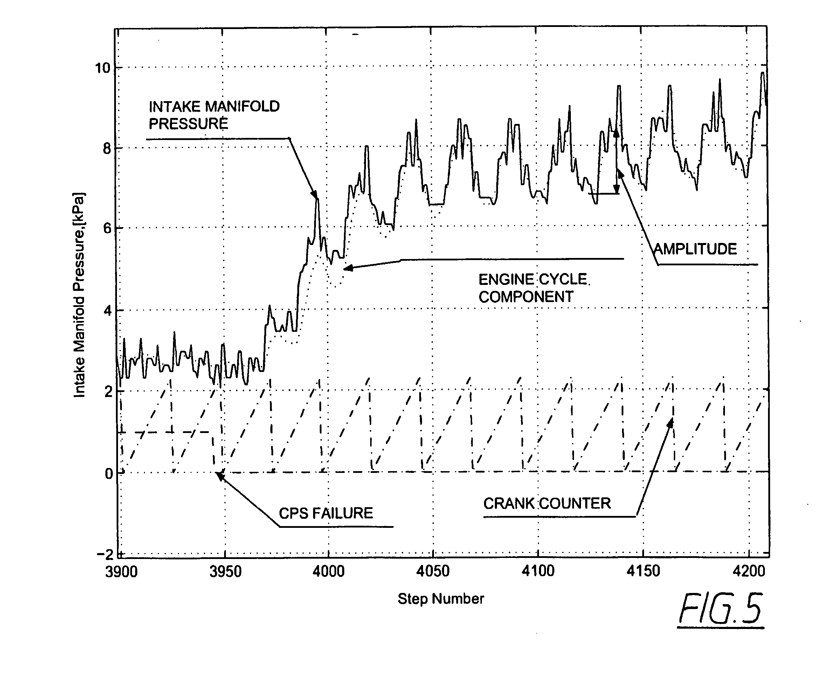

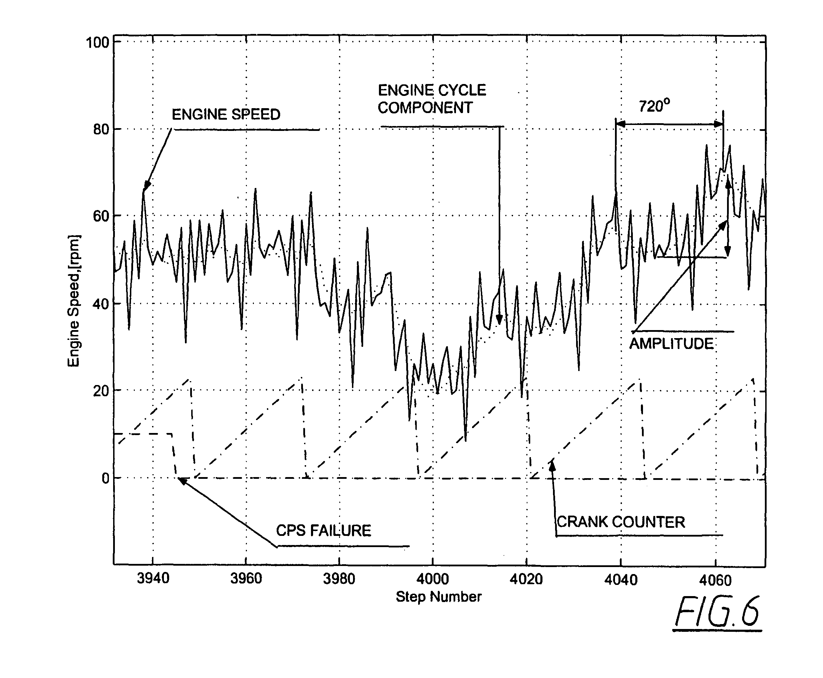

Figures 5 and 6 show an intake manifold pressure and engine speed signals as functions of a step number for engine operating at 4000 rpm. It can be seen that the engine cycle component indicates still a CPS failure in both cases.

In figure 5 the measurements of the intake manifold pressure are performed with the step 30 CA on the SI6 engine. Intake manifold pressure signal minus 68 kPa for six cylinder engine is plotted with the solid line. The engine speed is 4000 rpm. Crank Counter is plotted with dash dotted line. Engine cycle component of the manifold pressure signal is plotted with dotted line. The signal which initiates the CPS failure is plotted with dashed line.

In figure 6 the measurements of the engine speed are performed with the step 30 CA on the S16 engine. High frequency component of the engine speed signal for six cylinder engine is plotted with the solid line. The engine speed is 4000 rpm. Crank Counter is plotted with dash dotted line. Engine cycle component of the engine speed signal is plotted with dotted line. The signal which initiates the CPS failure is plotted with dashed line.

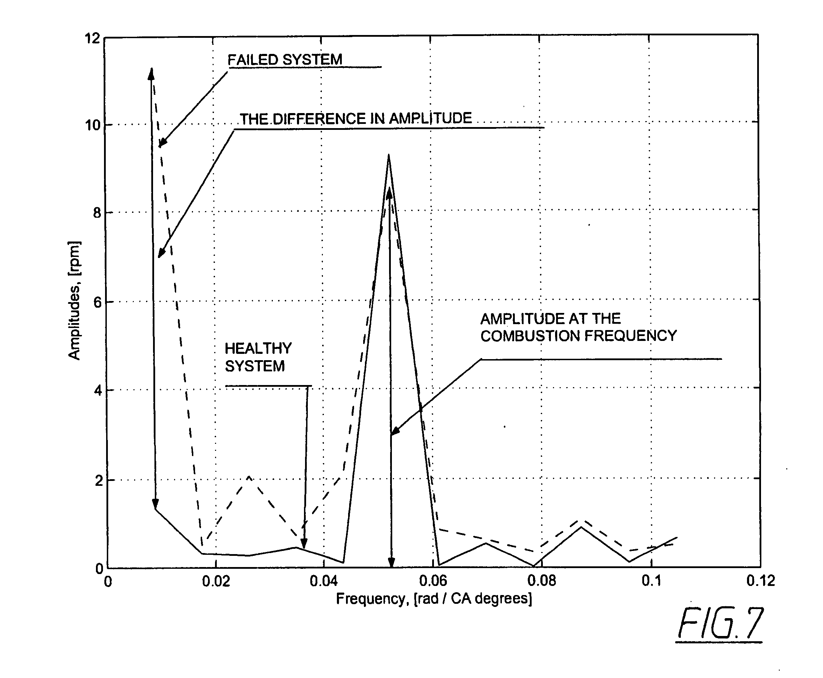

Figure 7 shows amplitudes for different frequencies in the engine speed signal for 1000 rpm for healthy and failed systems. It is easy to see that at the CPS state information can be recovered at the frequency

$$\frac{\pi}{360} \frac{rad}{CA\,degree}.$$

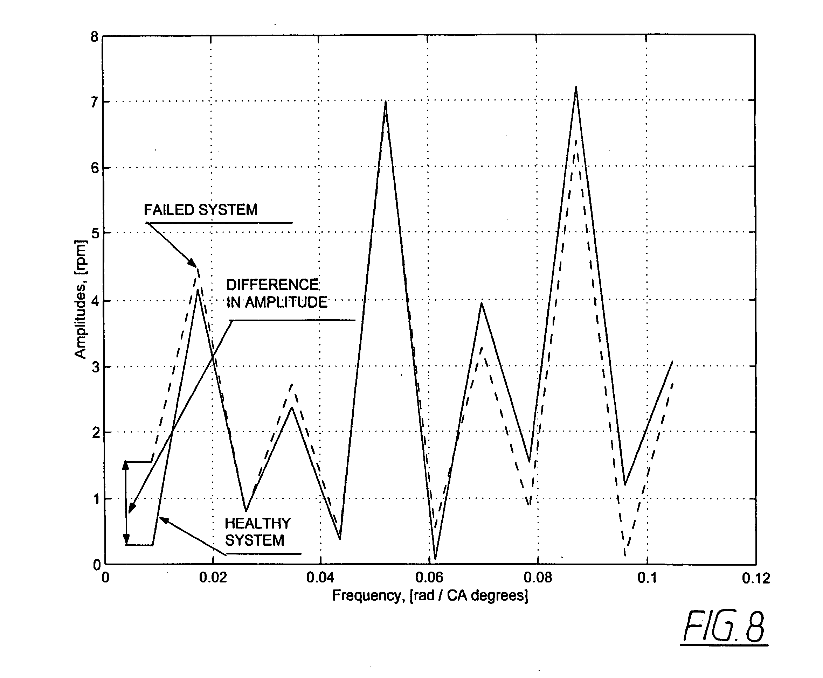

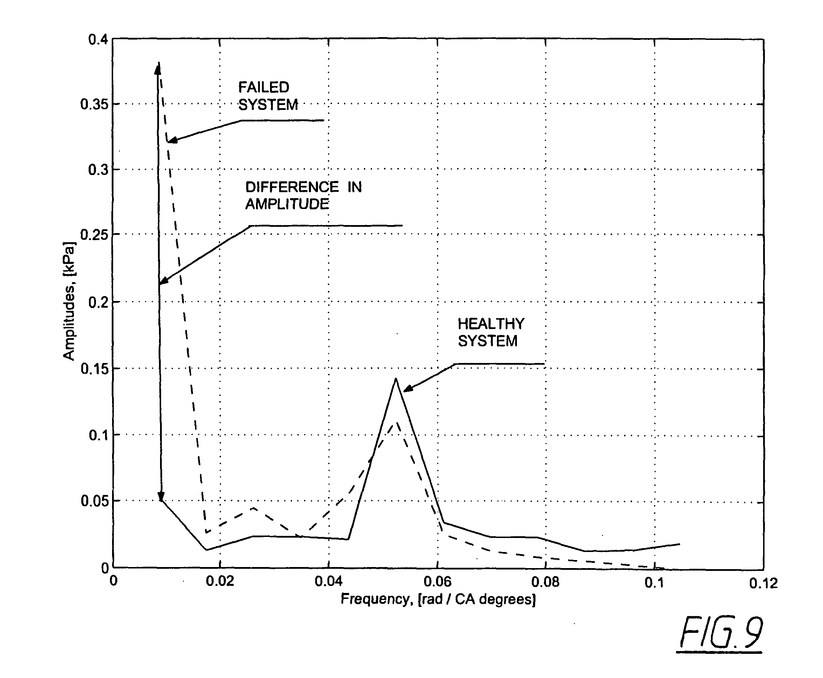

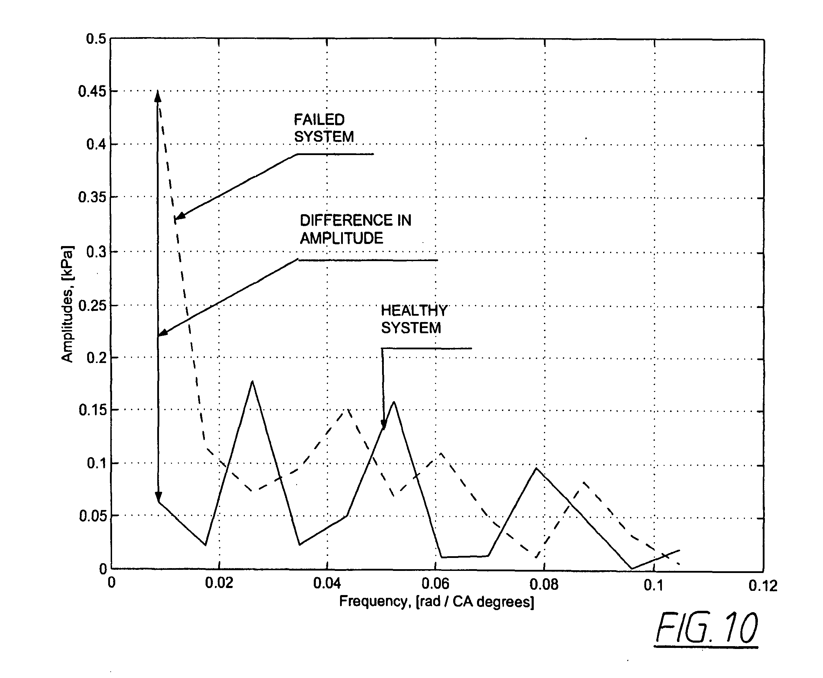

Figure 8 shows amplitudes at different frequencies in the engine speed signal for healthy and failed systems operating at a speed of 4000 rpm. Figures 9 and 10 show amplitudes for different frequencies for intake manifold pressure signal for healthy and failed systems at 1000 and 4000 rpm respectively.

In figure 7 the amplitudes for different frequencies in the engine speed signal are shown. Engine speed is 1000 rpm. Amplitudes for healthy system are plotted with solid line. Amplitudes for failed system are plotted with dashed line.

In figure 8 the amplitudes for different frequencies in the engine speed signal are shown. Engine speed is 4000 rpm. Amplitudes for healthy system are plotted with solid line. Amplitudes for failed system are plotted with dashed line.

In figure 9 the amplitudes for different frequencies in the intake manifold pressure signal are shown. Engine speed is 1000 rpm. Amplitudes for healthy system are plotted with solid line. Amplitudes for failed system are plotted with dashed line.

In figure 10 the amplitudes for different frequencies in the intake manifold pressure signal are shown. Engine speed is 4000 rpm. Amplitudes for healthy system are plotted with solid line. Amplitudes for failed system are plotted with dashed line.

Comparing the Figures 7 and 8 and Figures 9 and 10 it is easy to see that the difference in the amplitude for engine speed signal at the engine cycle component for healthy and failed systems decreases as the engine speed increases. The detection possibilities are better for the intake manifold pressure signal. Interestingly enough that the phase of the engine cycle component of the signal shows which Bank is failed.

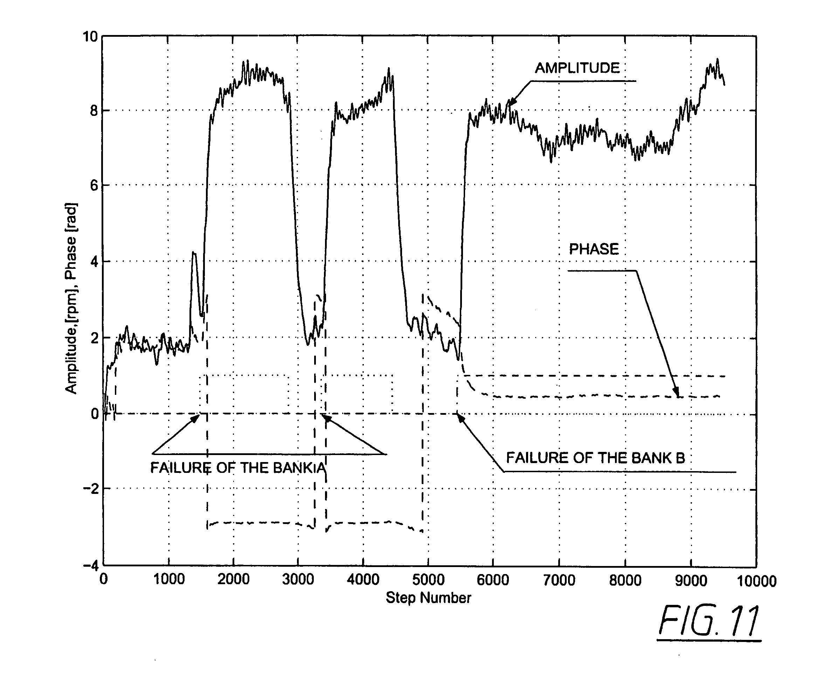

Figure 11 shows Discrete Fourier Transform (DFT) using moving in time window technique for the cycle component of the engine speed signal. Figure 11 shows that the failure of single Bank is recognizable on the amplitude of the component with the frequency

$$\frac{\pi}{360} \frac{rad}{CA\,degree}.$$

Thereby the phase of the signal shows which Bank is failed. This allows to conclude that a failure of a single Bank is recognizable on the component whose frequency is

$$\frac{\pi}{360} \frac{rad}{CA\, degree}.$$

In figure 11 the amplitude and phase of the component of the engine speed signal whose frequency is

$$\frac{\pi}{360} \frac{rad}{CA\, degree}$$ for different failures of the CPS Banks. Engine speed is 1000 rpm. Amplitude is plotted with a solid line, a phase is plotted with a dashed line. The signal which initiates the CPS failure of the Bank "A" is plotted with dashed line. The signal which initiates the CPS failure of the Bank "B" is plotted with dashdot line.

In the previous Section it was shown that the failure of one oil CPS Bank results in appearance of the component whose period is 720° CA degrees in the engine speed and intake manifold pressure. Thereby the amplitude of the signal whose frequency is

$$\frac{\pi}{360} \frac{rad}{CA\, degree}$$ indicates the failure of the CPS Bank, and the phase of the signal indicates which Bank is failed. The next is to design algorithms for detection of the CPS failure.

The behaviour of the combustion related signal signal (engine speed/ intake manifold pressure) in the presence of the failure of the CPS Bank is characterized, in terms of the pulsations, by three big pulses followed by three small pulses.

The amplitude of the signal of interest is defined as follows:

$$(1) \qquad A_i = s(\theta_{i1}) - (\theta_{i2})$$

where $\theta_1$ is the value of the CA corresponding to the maximal value of the third pulse of the signal, $\theta_2$ is the value of the CA corresponding to the minimal value of the first pulse of the signal. Index i indicates different Banks, i = 1,2.

To improve the quality of the signal the amplitudes should preferably be filtered by a lowpass filter.

$$(2) \qquad A_{if} = LP[A_i]$$

where $A_{if}$ are filtered values of the $A_i$, LP denotes a lowpass filter. The failure is detected if and only if $A_{if}$ exceeds a threshold value, which is, in turn, a function of speed and load.

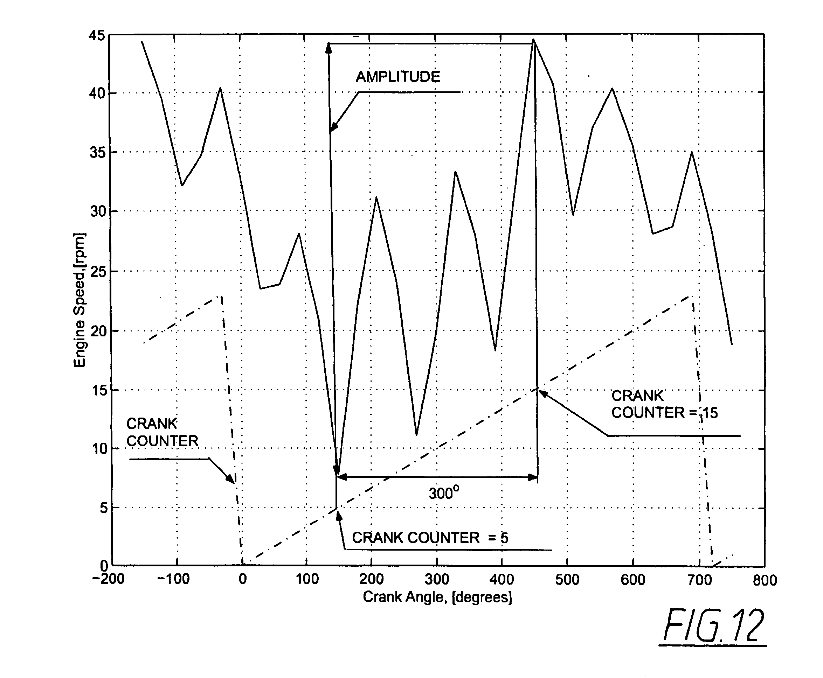

In Figure 12 an engine speed for a single engine cycle is plotted for the case of the failure of one Bank. Engine is operating at 1000 rpm. Amplitude of the engine cycle component is defined by equation (1).

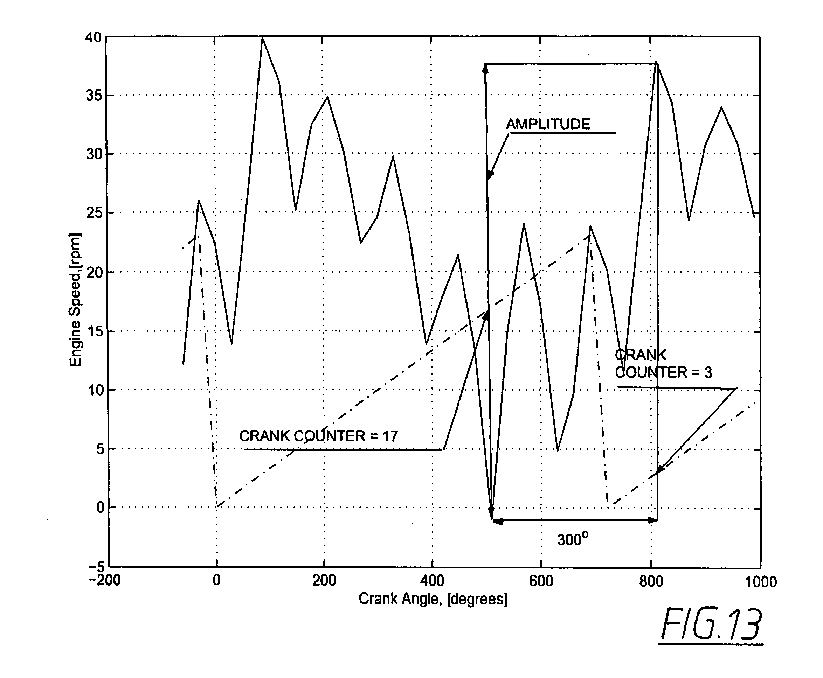

Notice, that the amplitude is defined as a difference between two values of the engine speed, i.e., between maximal value of the third pulse of the signal and the value of the engine speed 300 CA degrees before. Amplitude is calculated with the help of Crank Counter (see Fig.12). In Fig. 13 an engine speed signal is plotted in the case of a failure of another Bank. By comparing Figures 12 and 13 one conclude that failures of different Banks are recognizable via computing of different amplitudes (2).

In figure 12 measurements of the engine speed are performed with the step 30 CA on the S16 engine. High frequency component of the engine speed signal for six cylinder engine is plotted with the solid line. The engine speed is 1000 rpm. Crank Counter is plotted with dash dotted line.

In figure 13 measurements of the engine speed are performed with the step 30 CA on the S16 engine. High frequency component of the engine speed signal for six cylinder engine is plotted with the solid line. The engine speed is 1000 rpm. Crank Counter is plotted with dash dotted line.

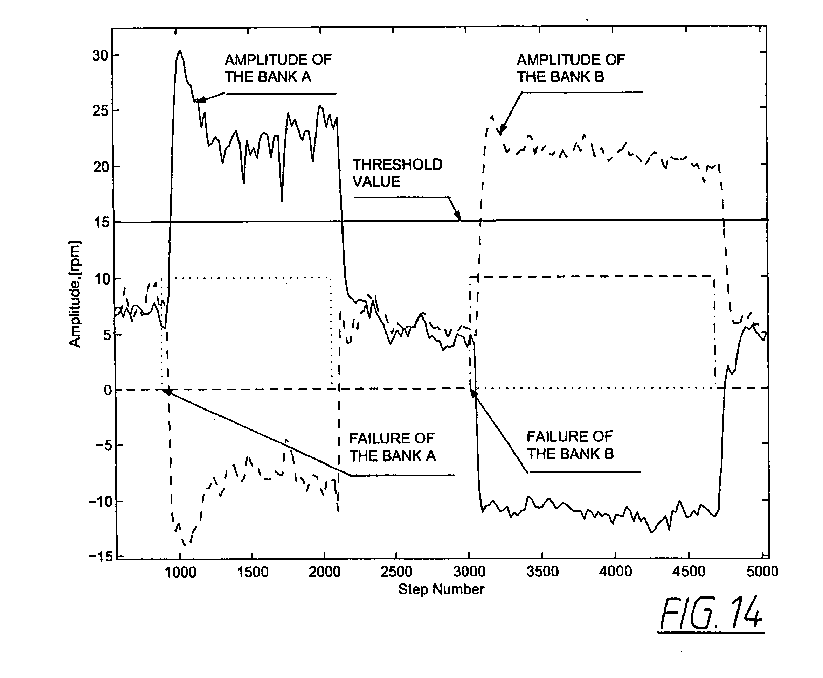

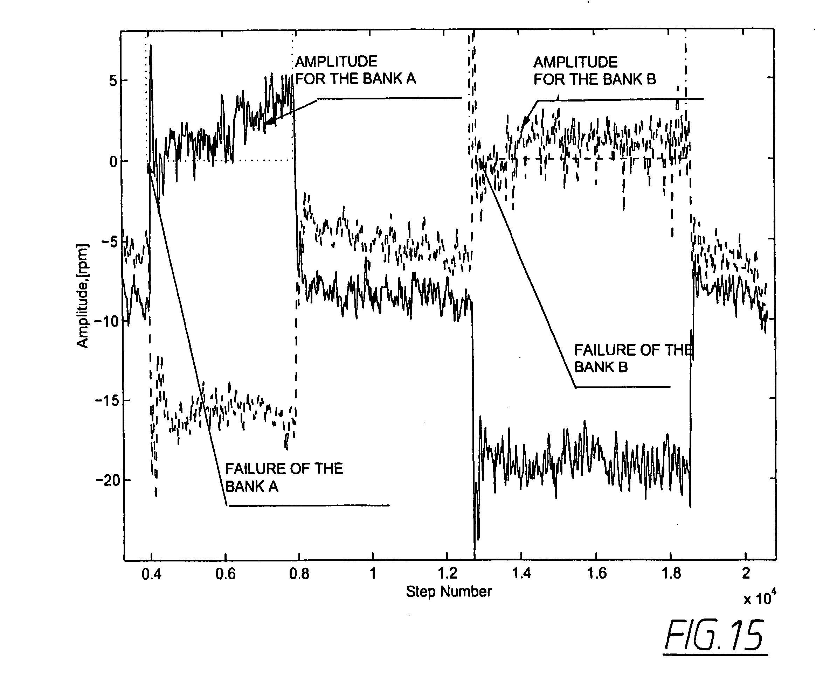

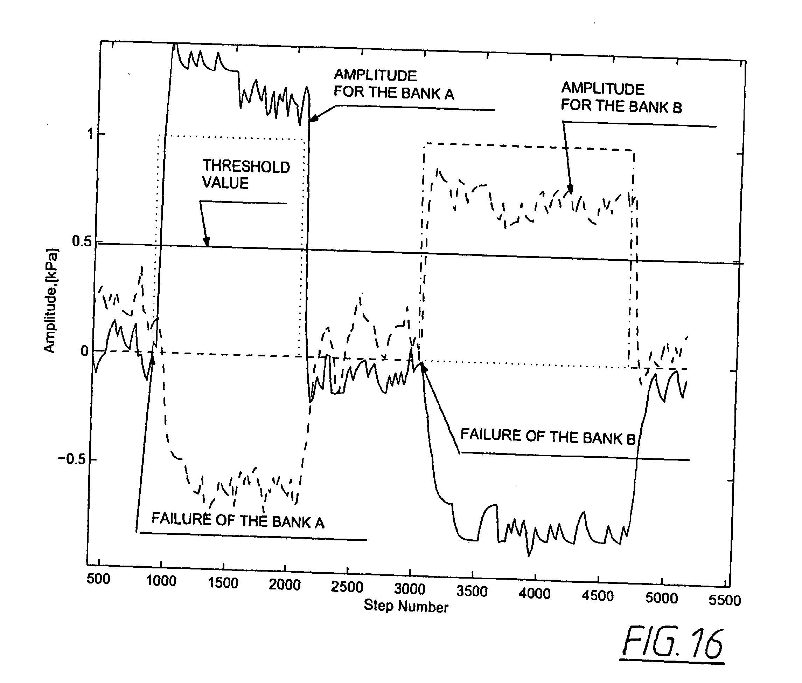

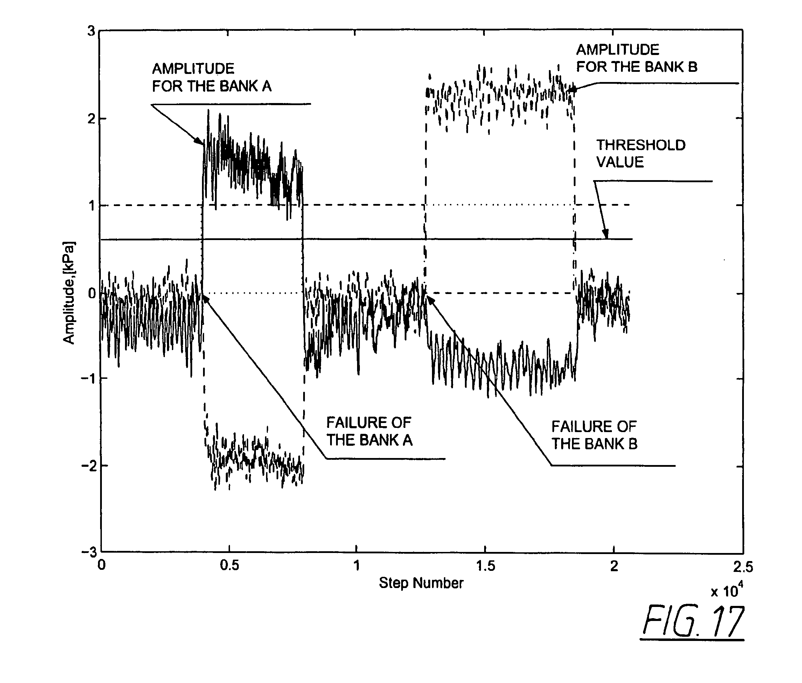

The filtered values of the amplitudes of the engine speed (equation (2)) for the case of the sequential failure of the Banks are plotted in Fig. 14 for 1000 rpm and in Fig 15 for 4000 rpm. By comparing Figures 14 and 15 it is possible to conclude that the quality of the detection signal deteriorates as soon as engine speed increases. Fig. 16 and 17 show the filtered values of the intake manifold pressure amplitudes (equation (2)).

In figure 14 the amplitudes of the engine speed for different failures of the CPS Banks are shown. Engine speed is 1000 rpm. Amplitude for the Bank A is plotted with a solid line. Amplitude of the Bank B is plotted with a dashed line. The signal which initiates the CPS failure of the Bank "A" is plotted with dotted line. The signal which initiates the CPS failure of the Bank "B" is plotted with dashdot line.

In figure 15 the amplitudes of the engine speed for different failures of the CPS Banks are shown. Engine speed is 4000 rpm. Amplitude for the Bank A is plotted with a solid line. Amplitude of the Bank B is plotted with a dashed line. The signal which initiates the CPS failure of the Bank "A" is plotted with dotted line. The signal which initiates the CPS failure of the Bank "B" is plotted with dashdot line.

In figure 16 the amplitudes of the intake manifold pressure for different failures of the CPS Banks are shown. Engine speed is 1000 rpm. Amplitude for the Bank A is plotted with a solid line. Amplitude of the Bank B is plotted with a dashed line. The signal which initiates the CPS failure of the Bank "A" is plotted with dotted line. The signal which initiates the CPS failure of the Bank "B" is plotted with dashdot line.

In figure 17 the amplitudes of the intake manifold pressure for different failures of the CPS Banks are shown. Engine speed is 4000 rpm. Amplitude for the Bank A is plotted with a solid line. Amplitude of the Bank B is plotted with a dashed line. The signal which initiates the CPS failure of the Bank "A" is plotted with dotted line. The signal which initiates the CPS failure of the Bank "B" is plotted with dashdot line.

The detection of the Bank failure is possible even for extremely high engine speeds, i.e. up to 5500 rpm. The detection signal quality is better for the intake manifold pressure than for engine speed signal. The Bank failure detection method based on the intake manifold pressure signal is far superior than the detection method based on the engine speed. However, the pressure pulsations picture can be disturbed for wide open throttle and hence a combination of two methods proposed above is required to complete the solution.

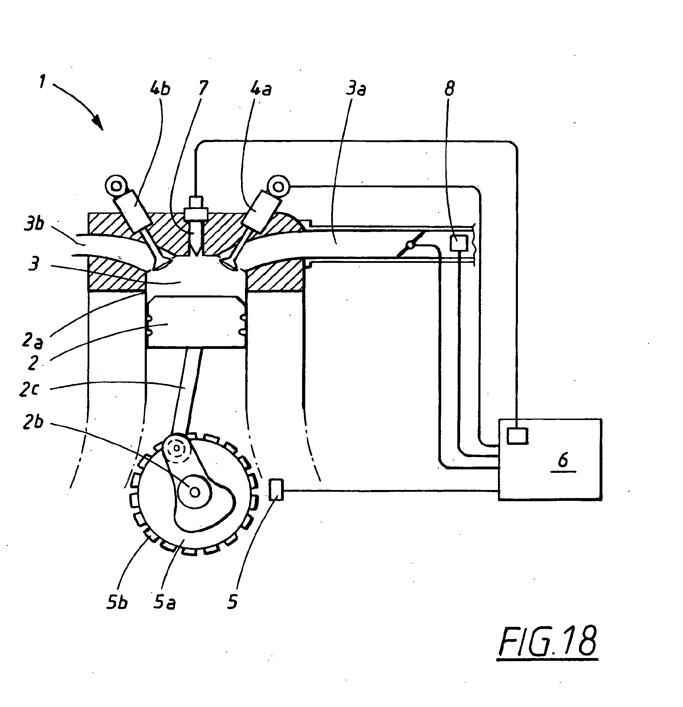

Figure 18 show a combustion engine 1 having a piston 2 reciprocatingly arranged in a cylinder 2a. The piston 2 actuates a crank shaft 2b to which the piston 2 is connected via a connecting rod 2c. Air or an air fuel mixture is fed into a combustion chamber 3 via an intake conduit 3a. Exhaust gases are discharged through an exhaust conduit 3b. The gas exchange in the combustion chamber is controlled by intake and exhaust valves 4a, 4b. The intake and/or exhaust valves may be controlled by cam profile switching means as will be disclosed below.

A crankshaft sensor 5 provides a signal corresponding to the angular position of crankshaft 2b. In the present embodiment, the crankshaft sensor 5 sense the passage of teeth arranged on a toothed wheel 5a connected to the crankshaft. The signal generated by the crankshaft sensor 5 consists of a pulse train, with each pulse corresponding to a specific section of an angle swept by crankshaft 2b. At a designated position of the crankshaft, a mark 5b is made that generates a special pulse and therefore makes it possible to determine the absolute position of the crankshaft. An electronic control unit 6 contains conventional means for determining the angular velocity of the crankshaft from the pulse train. The electronic control unit contains control means for controlling fuel injection to respective cylinder in the engine. The electronic control unit may furthermore contain an ignition control unit controlling the ignition timing of spark plugs 7 of the engine in the event the invention operates on a spark ignition engine. Furthermore the electronic control unit 6 communicates with a pressure sensor 8 mounted in the intake conduit. The control unit furthermore includes means for determining a component of the detected combustion related signal which has engine cycle periodicity, means for determining the amplitude value of said component, and means for detecting a failure in the cam profile switching system is detected in the event said amplitude exceeds a threshold value. The combustion related signal may be the engine speed determined from the pulse train provided from the crankshaft sensor 5 or the pressure in the intake conduit sensed by the pressure sensor 8.

The control unit furthermore contains conventional means for performing signal analysis in order to from the combustion related signal evaluate an amplitude of a component having engine cycle periodicity, which is 720° in the event the engine is run in 4 stroke mode and 1440° in the event the engine is run in 8 stroke mode.

The control unit additionally contains a comparator where the amplitude is compared with a threshold value. A failure in a cam profile switching system is detected if the amplitude exceeds a preset threshold value. Furthermore the control unit contains means for determining the phase angle of the component having engine cycle periodicity. The phase angle is used to determine which of switching means has failed in operation.

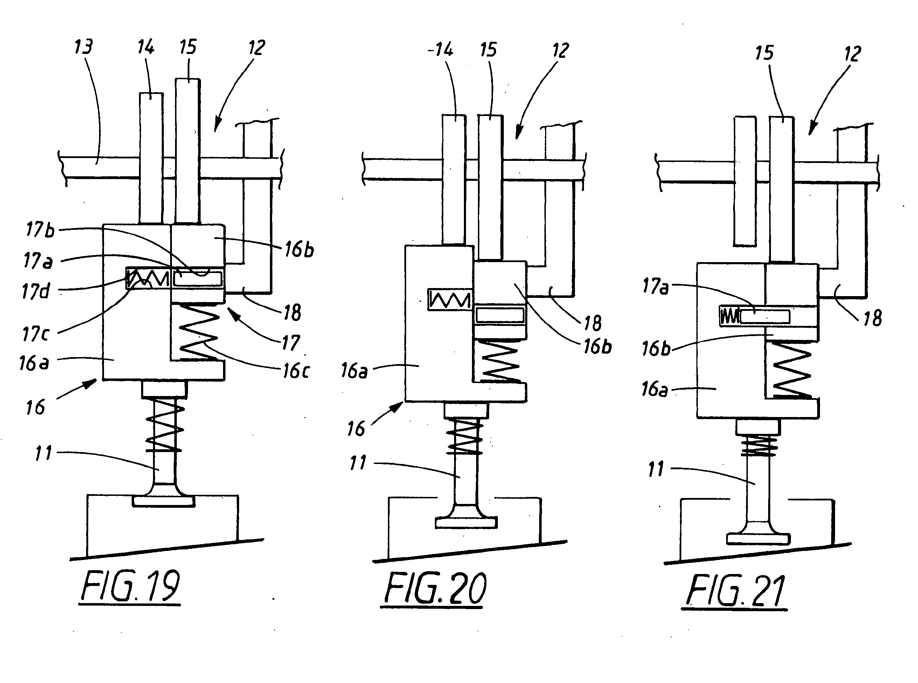

In figures 19 - 27 different embodiments of a combustion engine provided with an even number of cylinders constituting two separate groups of cylinders, a first switching means responsible for performing cam profile switching on the first group of cylinders and a second switching means responsible for performing cam profile switching on the second group of cylinders are shown. In these embodiments the ignition sequence is arranged such that ignitions in the individual cylinders of the first group sequentially follows after each other without interjacent ignitions in the second group and that ignitions in the individual cylinders of the second group sequentially follows after each other without interjacent ignitions in the first group.

Fig. 19 shows schematically, an arrangement at a cylinder in an internal combustion engine. The engine comprises six cylinders arranged essentially along a straight line. The cylinders could be provided with ignition means in each cylinder, e.g. in the form of one or more sparkplugs, or the engine could be adapted for compression ignition. At each cylinder one, two or more intake valves, and also one, two or more exhaust valves are provided. For simplicity of this presentation, in fig. 19 only one valve 11 is shown. The valve 11 is adapted to be actuated by a valve actuation arrangement 12 including a camshaft 13. Fig. 19 shows a part of the valve actuation arrangement 12 and the valve 11 in positions at which the valve is not lifted. Here it is assumed that all valves in each cylinder are actuated by a camshaft, but it is also possible that only one or some of the valves are camshaft driven, and others actuated in other ways, e.g. electromagnetically. It is also possible that two or more camshafts are used, each for different valves in each cylinder and/or valves in different cylinders.

The valve actuation arrangement 12 includes cam lobes 14, 15 on the camshaft 13 and tappets 16 at each valve 11, arranged between the camshaft 13 and the valves 11 and each adapted to transfer movements from the camshaft to the respective valve 11. It is also possible that one, some or all of the tappets 16 are adapted to transfer movements to more than one valve each.

The engine is adapted to run selectively in two valve lift modes, differing regarding the valve lift characteristics influencing the duration of and/or the distance of the valve motion, i.e. the lift. The valve actuation arrangement 12 includes actuation adjustment mechanisms 17, each arranged at a tappet 16, described closer below. Each actuation adjustment mechanism 17 is adapted to adjust the respective tappet 16 so as to effect shifts from one valve lift mode to another.

In addition to different valve lift modes, the engine can be adapted to run in different operation modes. The latter can include stroke modes, such as a four stroke mode or an eight stroke mode. In an engine with camshaft actuated valves, an eight stroke mode can be achieved with cylinder deactivation, as is known in the art. The invention is also applicable to engines where all valves are actuated independently of the crankshaft. As an example, the valve actuation arrangement can include devices for electromagnetic actuation of the valves. Even if the valves are actuated independently of the crankshaft, the valve actuation arrangement can include actuation adjustment mechanisms for shifting between different valve lift modes. In an engine where the valves are actuated independently of the crankshaft, many different engine operation modes in the form of stroke modes can be achieved, e.g. two, four, six, eight, twelve or sixteen stroke mode.

Fig. 19 shows schematically a valve 11 and a part of the valve actuation arrangement 12 in positions at which the valve is not lifted. The valve actuation arrangement 12 includes for each valve a first cam lobe, herein referred to as a low lift cam lobe 14, and a second cam lobe, herein referred to as a high lift cam lobe 15, on the camshaft 13. The high lift cam lobe 15 has a larger eccentric than the low lift cam lobe 14. The high lift cam lobe 15 can also, or alternatively, have a different profile than the low lift cam lobe 14 so as to provide for different valve lift characteristics during parts or the whole lifting process, and also a different duration and/or timing of lifting process.

The tappet 16 comprises two parts, a main part 16a and an additional part, herein referred to as a high lift part 16b, whereby the high lift part 16b is movable in relation to the main part 16a in direction perpendicular to the camshaft 13, and biased towards the camshaft by means of a spring 16c. The actuation adjustment mechanism 17 can assume a first position in which a first valve lift mode, in this example also called a low lift mode, can be effected. The actuation adjustment mechanism 17 includes a locking device comprising a locking pin 17a. In the first position of the actuation adjustment mechanism 17 the locking pin 17a is located in a first space 17b, with a delimitation having an elongated shape, in the high lift part 16b. Thereby, the locking device is in an unlocked position.

Fig. 20 shows schematically the valve 11 and a part of the valve actuation arrangement 12 at maximum lift of the valve 11 in the low lift mode. The low lift cam lobe 14 pushes the tappet 16 and the valve 11, at which the high lift cam lobe 15 pushes the high lift part 16b along the main part 16a, without acting on the valve 11.

Referring to fig. 19, the locking pin 17a can be moved into a second space 17c in the main part 16a with hydraulic pressure provided through an oil gallery 18 of a mechanism control system, a part of which is shown in fig. 19 and which communicates, at least when the valve is not lifted, with the first space 17b. To shift from the first valve lift mode to a second valve lift mode, in this example referred to as high lift mode, the locking pin is moved by hydraulic pressure, provided through the oil gallery 18, partly into the second space 17c, for the actuation adjustment mechanism 17 to assume a second position, here a locking position. Thereby, the high lift part 16b is locked to the main part 16a.

A spring 17d provides for moving the locking pin 17a out of the second space 17c when the hydraulic pressure is released. Thereby, a shift from the high lift to the low lift mode is possible. Alternatively, the locking pin can be moved out of the second space 17c by hydraulic pressure in an additional oil gallery that communicates with the second space 17c.

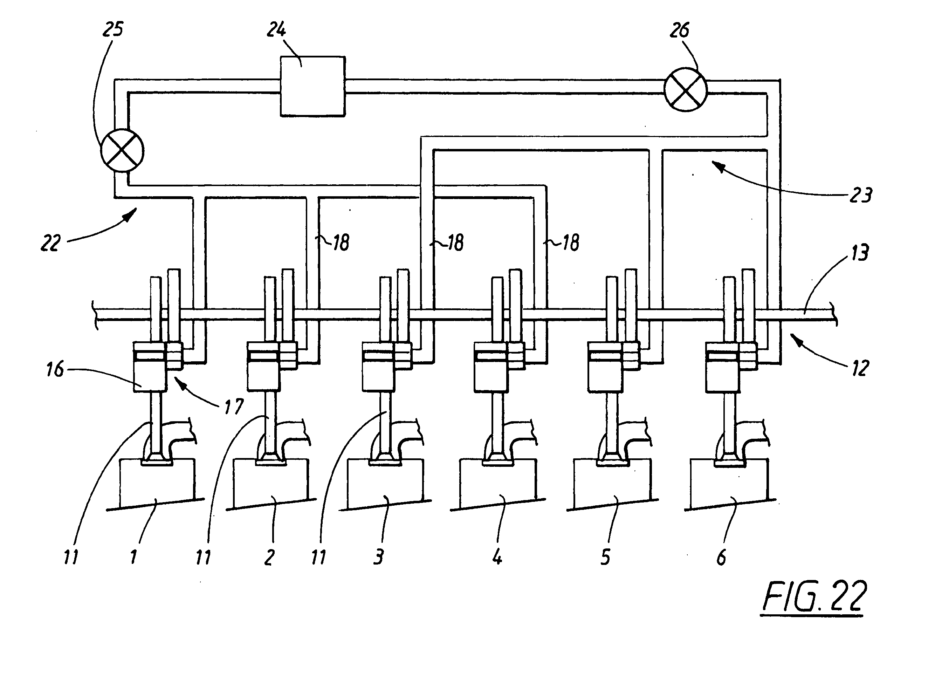

Fig. 21 shows schematically the valve 11 and a part of the valve actuation arrangement 12 at maximum lift of the valve 11 in the high lift mode. The high lift cam lobe 15 acts on the valve 11 via the high lift part 16b, the locking pin 17a, and the main part 16a. The valve actuation arrangement in fig. 19, 20 and 21 corresponds schematically to a CPS (Cam Profile Shifting) system.

As can be understood from the above, a shift of valve modes can not be effectuated when the valve is in the process of lifting, since parts of the actuation adjustment mechanism 17, i.e. the locking pin 17a, the first space 17b, and the second space 17c, have to be positioned properly in relation to each other for the locking pin to move in or out of the locking position. Also, if a shift from the low to the high lift mode is attempted during the initial phase of the lifting process of a valve, referring to fig. 19, the relative movement between the main part 16a and the high lift part 16b and the simultaneous movement of the locking pin 17a towards the second space 17c could result in excessive wear or damages of certain parts. This problem is present in all valve actuation arrangements, where shifting between different valve lift modes are effected by means of locking mechanisms, different parts of which move in relation to each other during valve lift processes.

Thus, the valve mode shifts have to be effected during crank shaft angle intervals between the valve lift processes, or at least between critical stages of the valve lift processes. In the example above such a critical stage is when different parts, i.e. referring to fig. 19 the main part 16a and the high lift part 16b, of each actuation adjustment mechanism start moving in relation to each other. Typically, in CPS system such a critical stage including safety margins is approximately 10 CA (crankshaft angle degrees). However, the duration of the critical stage can vary depending on the type of actuation adjustment mechanism used, or the tolerances in the valve train. In a four stroke operation mode of a six cylinder engine there is, at least on average, 120 CA between each intake valve actuation or each exhaust valve actuation. Then, if the oil gallery 18, (fig. 19), communicates with actuation adjustment mechanisms of all cylinders, there are windows of approximately 110 CA in which mode shifts can be carried out. This is a relatively small interval which put high demands on accuracy of any control system for the actuation adjustment mechanisms.

If there are two parts of a hydraulic system, or two hydraulic systems, that can be controlled separately and each of which communicates through respective oil galleries with actuation adjustment mechanisms of a separate set of cylinders, the windows for valve lift mode shifts can be larger. We assume that in an inline six cylinder engine, the cylinders being denoted 1, 2, 3, 4, 5, 6, corresponding to their relative spatial position, one set comprises cylinders 1, 2 and 3, and another set comprises cylinders 4, 5 and 6, and also that the ignition sequence of the engine is 1-5-3-6-2-4. Then, in a four stroke operation mode of the engine there is in each set, at least on average, 240 CA between initiations of the valve lift processes, which leaves windows of 230 CA for mode switch operations, if critical stages of the valve lift processes are taken into account.

Fig. 22 shows a schematic view of a part of the internal combustion engine at which the inventive detection method may be used. The combustion engine includes the arrangement shown in fig. 19, 20, and 21. As mentioned, the six cylinders 1, 2, 3, 4, 5, 6 are arranged essentially along a straight line. A hydraulic system includes a first sub system 22, herein also referred to as a first mechanism control system 22, and a second sub system 23, herein also referred to as a second mechanism control system 23, both adapted to be pressurized by a common hydraulic pump 24. Alternatively, the first mechanism control system 22 and the second mechanism control system 23, could be respective parts of two separate hydraulic systems.

As an alternative, each actuation adjustment mechanism 17 could be electromagnetic arrangements, whereby the first and the second mechanism control system 22, 23 could be provided as electric systems.

Each mechanism control system 22, 23 communicates with the actuation adjustment mechanisms 17 at a respective set of the cylinders. The first mechanism control system 22 and the second mechanism control system 23 includes a first 25 and a second control valve 26, respectively, to control the pressure in the oil galleries 18. Suitably, the first and second control valves 25, 26 are solenoid valves controllable through signals from a control system of the engine.

In a combustion engine at which the inventive detection method may be used, the sets of cylinders are arranged in view of the ignition sequence of the engine. In this example the ignition sequence of the engine in a four stroke mode is 1-5-3-6-2-4, which is a standard sequence for inline six cylinder engines. A first set of cylinders, controllable through the first mechanism control system 22, includes two cylinders 1, 2 closest to a first end of the row of cylinders, and the fourth cylinder 4 in relation to the first end of the row of cylinders. A second set of cylinders, controllable through the second mechanism control system 23, includes two cylinders 5, 6 closest to a second end of the row of cylinders, and the third cylinder 3 in relation to the first end of the row of cylinders. This means that the first set of cylinders 1, 2, 4 is adapted so that each ignition in a cylinder of the first set 1, 2, 4 is preceded and/or followed by an ignition in a cylinder of the first set 1, 2, 4, without any intermediate ignition in the second set of cylinders. Similarly, the second set of cylinders 3, 5, 6 is adapted so that each ignition in a cylinder of the second set 3, 5, 6 is preceded and/or followed by an ignition in a cylinder of the second set 3, 5, 6, without any intermediate ignition in the first set of cylinders. In other words, each set of cylinders consists of cylinders which are consecutive in a firing sequence. Thereby, at least one cylinder of the second set of cylinders is positioned between two cylinders of the first set of cylinders, and at least one cylinder of the first set of cylinders is positioned between two cylinders of the second set of cylinders.

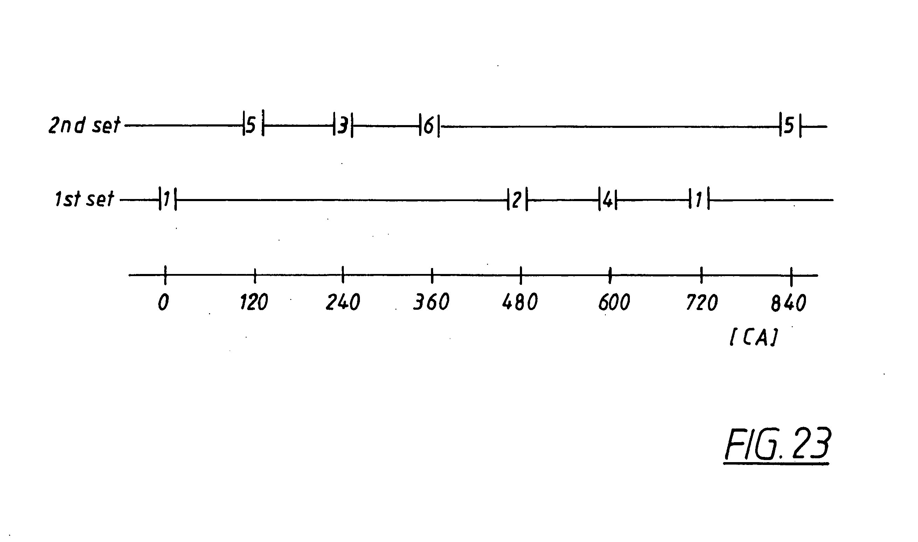

To clarify the advantage of the particular embodiments of the combustion engines disclosed herein and at which the inventive detection method may be used, fig. 23 shows a diagram of valve lift processes in the engine partly depicted in fig. 22. The diagram shows critical stages of the valve lift processes in actuation adjustment mechanisms of each set of cylinders, indicated with the cylinder number at respective crankshaft angles. It can be seen that in each four stroke cycle and for each set of cylinders there is one large window, also called trigger window, of approximately 470 CA if a duration of 10 CA is assumed. Thereby, if a valve lift mode shift is requested, this can be effected by activating the first mechanism control system 22 during an interval between critical stages at the first and the second cylinder 1, 2, and activating the second mechanism control system 23 during an interval between critical stages at the sixth and the fifth cylinder 6, 5.

The large windows in the CA domain for effecting valve lift mode shifts, achieved by the embodiments of the combustion engines disclosed, drastically reduces risks of triggering a mode shift at the wrong moment. This will reduce risks of damages occurring in the engine, specially in the valve trains, due to a mode shift being effected during a critical stage of the valve lifting process. The large windows achieved will also increase considerably the predictability for each cylinder of the cycle in which the mode shift will be effected. This will substantially reduce the risk of a mode shift being effected in a cycle different to the predicted cycle, which could result in a lack of coordination between the valve lift and other parameters, such as the amount of air to be inducted, which in turn could result in a misfire. The large windows achieved by the embodiments of combustion engines disclosed herein allows for relatively low tolerances and relatively large inaccuracies in the action of the mode shift arrangement, which can simplify the design thereof and lower production costs.

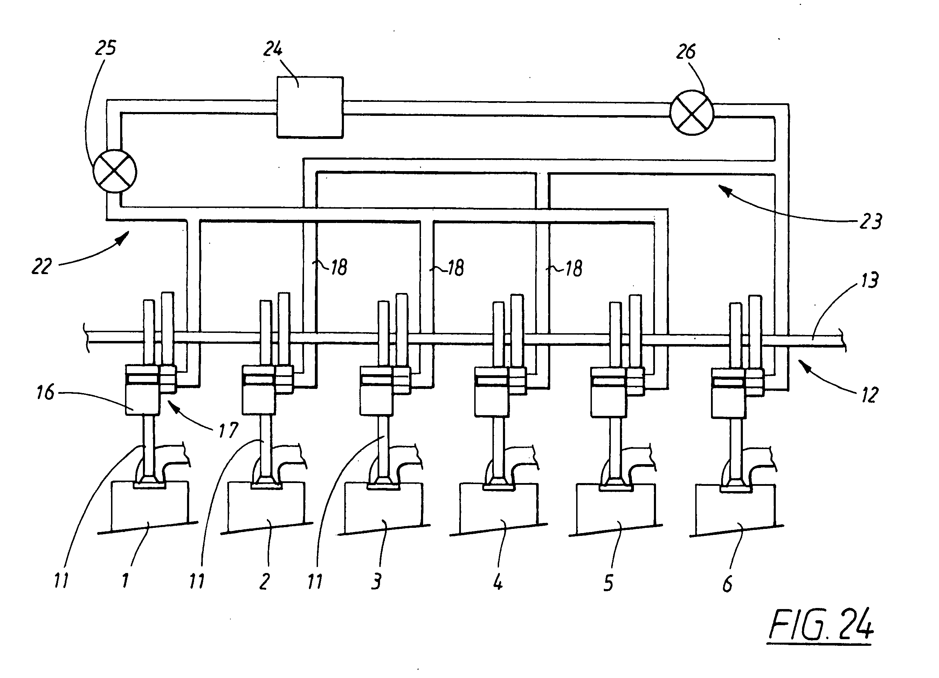

Fig. 24 shows a schematic view of a part of the internal combustion engine according to an alternative combustion engine arrangement, and including the arrangement shown in fig. 19, 20, and 21. As in the example described with reference to fig. 22, here there are six cylinders 1, 2, 3, 4, 5, 6 are arranged essentially along a straight line, a hydraulic system, with a first mechanism control system 22 and a second mechanism control system 23 both adapted to be pressurized by a common hydraulic pump 24. As described above, each mechanism control system 22, 23 communicates with the actuation adjustment mechanisms 17 at a respective set of the cylinders, and the first mechanism control system 22 and the second mechanism control system 23 includes a first 25 and a second control valve 26, respectively.

The ignition sequence of the engine is the same as above, i.e. 1-5-3-6-2-4. Differing from the example above, here a first set of cylinders, controllable through the first mechanism control system 22, includes the first, third and fifth cylinder 1, 3, 5 in relation to a first end of the row of cylinders. A second set of cylinders, controllable through the second mechanism control system 23, includes the second, fourth and sixth cylinder 2, 4, 6 in relation to the first end of the row of cylinders. Thereby, the first set of cylinders 1, 3, 5 is adapted so that each ignition in a cylinder of the first set 1, 3, 5 is preceded and/or followed by an ignition in a cylinder of the first set 1, 3, 5, without any intermediate ignition in the second set of cylinders. Similarly, the second set of cylinders 2, 4, 6 is adapted so that each ignition in a cylinder of the second set 2, 4, 6 is preceded and/or followed by an ignition in a cylinder of the second set 2, 4, 6, without any intermediate ignition in the first set of cylinders. In other words, each set of cylinders consists of cylinders which are consecutive in a firing sequence.

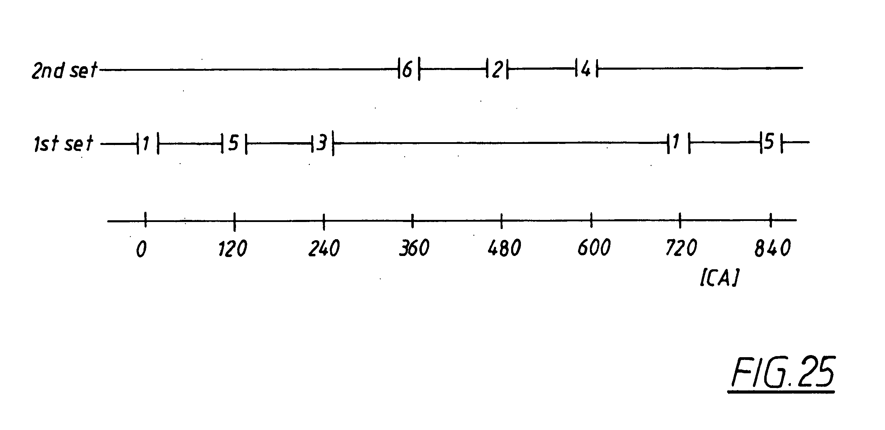

Fig. 25 shows a diagram of valve lift processes in the engine partly depicted in fig. 24. The diagram shows critical stages of the valve lift processes, similarly to fig. 23 referred to above. In each four stroke cycle and for each set of cylinders there is one large window of approximately 470 CA if a duration of 10 CA is assumed. Thereby, if a valve lift mode shift is requested, this can be effected by activating the first mechanism control system 22 during an interval between critical stages at the third and the first cylinder 3, 1, and activating the second mechanism control system 23 during an interval between critical stages at the fourth and the sixth cylinder 4, 6.

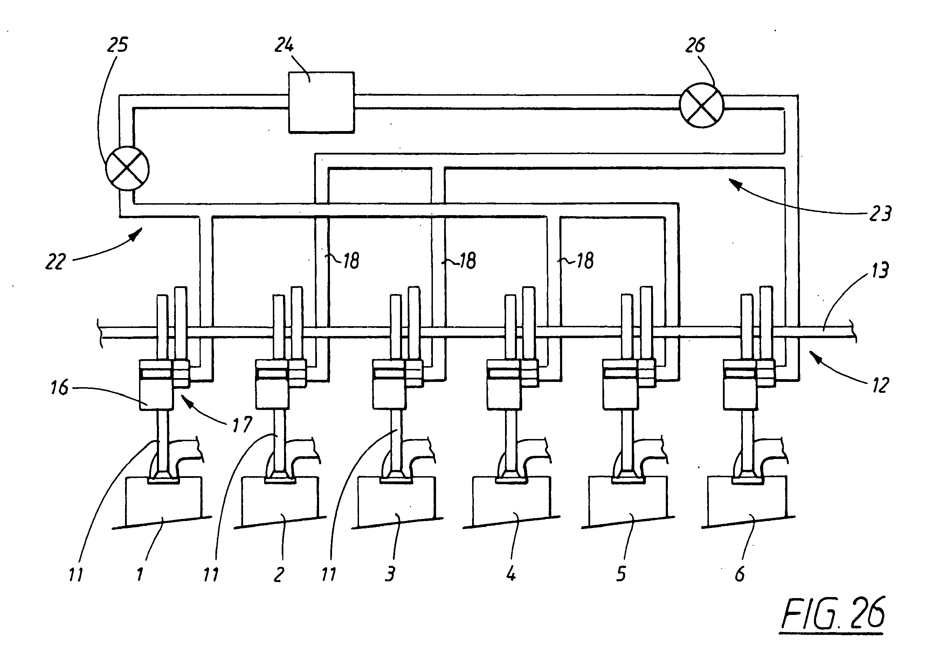

Fig. 26 shows a schematic view of a part of the internal combustion engine according to a further embodiment of a combustion engine arrangement, and including the arrangement shown in fig. 19, 20, and 21. Differing from the embodiments shown in fig. 22 and 24, a first set of cylinders, controllable through a first mechanism control system 22, includes the first, fourth and fifth cylinder 1, 4, 5 in relation to a first end of the row of cylinders. A second set of cylinders, controllable through a second mechanism control system 23, includes the second, third and sixth cylinder 2, 3, 6 in relation to the first end of the row of cylinders. As in the embodiments described above, ignitions in each set of cylinders are consecutive.

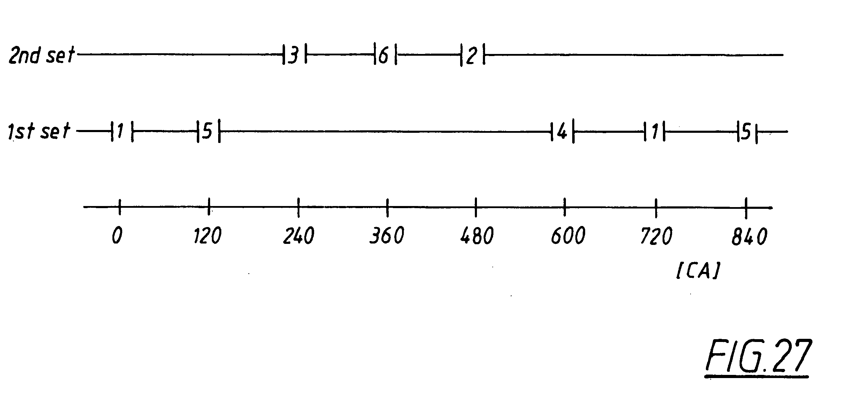

Fig. 27 shows a diagram of valve lift processes in the engine partly depicted in fig. 26. The diagram shows critical stages of the valve lift processes, similarly to fig. 23 and 25 referred to above. In each four stroke cycle and for each set of cylinders there is a window of approximately 470 CA if a duration of 10 CA is assumed, and if a valve lift mode shift is requested, this can be effected by activating the first mechanism control system 22 during an interval between critical stages at the fifth and the fourth cylinder 5, 4, and activating the second mechanism control system 23 during an interval between critical stages at the second and the third cylinder 2, 3.

It should be pointed out that the embodiment described above with reference to fig. 22 has special merits in that, in comparison to e.g. the embodiment described with reference to fig. 24, it provides for shorter channels in the engine block for the oil galleries 18. Also, it contains less intersections of conduits of separate oil galleries 18, which is an advantage, since these intersections present problems in the design and manufacturing of the engine. Thus, this embodiment will result in a relatively simple design and relatively low manufacturing costs.

In summary the inventive detection method may advantageously be used in an internal combustion engine with a plurality of cylinders, where

- at least one valve (11) at each cylinder being adapted to be actuated by a valve actuation arrangement (12),
- the valve actuation arrangement (12) comprising at least two actuation adjustment mechanisms (17) forming a first switching means responsible for performing cam profile switching on the first group of cylinders and a second switching means responsible for performing cam profile switching on the second group of cylinders, each adapted to assume a first position whereby at least one of the valves can be actuated according to a first valve lift mode, and to assume a second position whereby at least one of the valves can be actuated according to a second valve lift mode,
- the position of at least one actuation adjustment mechanism (17) for at least one valve (11) at a first set of cylinders being controllable through a first mechanism control system (22), and
- the position of at least one actuation adjustment mechanism (17) for at least one valve (11) at a second set of cylinders is controllable through a second mechanism control system (23),

whereby the first set of cylinders consists of cylinders which are consecutive in a firing sequence, during operation of the engine according to at least one engine operation mode.

It should be pointed out that the invention is applicable to engines with other types of actuation adjustment mechanisms than the type described above. Above, the invention has been described with reference to an engine operation mode of four stroke cycles, but it could also be adapted to other stroke modes, such as six, eight or twelve stroke modes, where ignition sequences could differ from the four stroke mode.

Above, the engine described is an inline six cylinder engine. However, the invention is also applicable to engine with different configurations. For example, it can be used in a V-8 engine, with the ignition sequence 1-5-4-8-6-3-7-2. Also, in a V-12 engine the invention can be used, at which each bank of the engine corresponds to an inline six cylinder engine. This means that the invention can be applied as described above to each bank of a V-12 engine.

The proposed algorithms allow the detection of the failures in the wide range of the engine operating conditions and under the transients. This, in its turn, allows reconfiguration of the engine control system and the reduction of the impacts introduced by the failures. The proposed algorithms allow the cylinder individual diagnostics which in turn allows to meet OBD2 requirements for S16 engines. Moreover, the detection of the individual valve faults is also possible. This detection capability exceeds OBD2 requirements. The algorithms for the detection of the individual valve faults can be used in the workshops for the service purposes, i.e., for diagnosis of the production vehicles also. Currently, in the case of the failure of a single valve all the valves are changed. The application of the proposed algorithms allow to change the failed valve only. Failure of an individual valve is detected by comparing the amplitude of the combustion related valve, with a threshold value. Since a failure of both valves results in a larger amplitude, the failure at a single valve could be separated from a failure in both valves.

In the most general application the method allow that a failing individual bank is identified. A failing individual bank corresponds to a failure which is effecting all valves controlled by the first or second switching means related to the failing individual bank. For example, according to an embodiment, only the intake valves are effected by the cam profile switching means, a failure in one of the switching mans will effect all intake valves in the related bank. In a further embodiment a failing individual cylinder may be identified. A failing individual cylinder corresponds to a failure which is effecting all valves controlled by the first or second switching means related to the failing individual cylinder. For example, according to an embodiment, only the intake valves are effected by the cam profile switching means, a failure at an individual cylinder will effect all intake valves in the related cylinder.

In still another embodiment, a failing valve may be detected. A failing valve corresponds to a failure which is effecting a single valve controlled by the first or second switching means related to a failing individual cylinder. For example, according to an embodiment, only the intake valves are effected by the cam profile switching means.

## Claims

1. Method for detection failure in a cam profile switching system arranged at an internal combustion engine provided with an even number of cylinders constituting two separate groups of cylinders, a first switching means (22,17) responsible for performing cam profile switching on the first group of cylinders (1,2,4) and a second switching means (23, 17) responsible for performing cam profile switching on the second group of cylinders (3,5,6), said method including the steps of:

   - arranging an ignition sequence such that ignitions in the individual cylinders of the first group sequentially follows after each other without interjacent ignitions in the second group and that ignitions in the individual cylinders of the second group sequentially follows after each other without interjacent ignitions in the first group,
   - detecting a combustion related signal,
   - determining a component of the detected combustion related signal which has engine cycle periodicity, and
   - determining the amplitude value of said component, wherein
   - a failure in the cam profile switching system is detected in the event said amplitude exceeds a threshold value.

2. Method according to claim 1, **characterized in that** failing individual bank is identified, where a failing individual bank corresponds to a failure which is effecting all valves controlled by the first or second switching means related to the failing individual bank.

3. Method according to claim 1, **characterized in that** failing individual cylinder is identified, where a failing individual cylinder corresponds to a failure which is effecting all valves controlled by the first or second switching means related to the failing individual cylinder.

4. Method according to any of claims 1 - 3, **characterized in that** a phase angle of said component in relation to a crank counter is determined, and that the phase angle is used to determine which of the first and switching means that has failed.

**5.** Method according to any of claims 1 - 4, **characterized in that** a phase angle of said component in relation to a crank counter is determined, and that the phase angle is used to determine which individual cylinder has failed.

**6.** Method according to claim 5, **characterized in that** a failing valve is detected, where a failing valve corresponds to a failure which is effecting a single valve controlled by the first or second switching means related to a failing individual cylinder.

**7.** Method according to claim 6, **characterized in that** said amplitude is used to determine whether one or more individual valves have failed.

**8.** Method according to any of the preceding claims, **characterized in that** said combustion related signal is constituted by the engine speed signal.

**9.** Method according to any of claims 1 - 8, **characterized in that** said combustion related signal is constituted by the intake manifold pressure signal.

**10.** Method according to any of the preceding claims, **characterized in that** the engine cycle periodicity is 720° crank angle.

**11.** Method according to any of the preceding claims, **characterized in that** said amplitude is determined as the difference between the maximum value and the minimum value of the combustion related signal within a frame corresponding to an engine cycle periodicity.

**12.** Method according to claim 11, **characterized in that** the minimum determined as the signal value of the combustion related signal that is positioned

$$360°(1 - \frac{1}{N})$$ before the maximum value of the combustion related signal, where N equals the number of cylinders.

**13.** Method according to claim 11 or 12, **characterized in that** a low cam profile is applied to the cylinders at which combustion takes place in the interval between the minimum value of the combustion related signal and a consecutively following maximum value of the combustion related signal positioned 360°

$$360°(1 - \frac{1}{N})$$ after the minimum value, where N equals the number of cylinders.

**Patentansprüche**

**1.** Verfahren zur Fehlererkennung in einem Nockenprofilumschaltsystem, welches an einem Verbrennungsmotor vorgesehen ist, wobei der Verbrennungsmotor eine gerade Anzahl von Zylindern, die zwei separate Zylindergruppen bilden, ein erstes Umschaltmittel (22, 17), welches für das Nockenprofilumschalten der ersten Gruppe von Zylindern (1, 2, 4) verantwortlich ist, sowie ein zweites Umschaltmittel (23, 17), welches für das Nokkenprofilumschalten der zweiten Gruppe von Zylindern (3, 5, 6) verantwortlich ist, aufweist, wobei das Verfahren die folgenden Schritte aufweist:

- Vorsehen einer Zündsequenz derart, dass die Zündvorgänge in den einzelnen Zylindern der ersten Gruppe sequentiell aufeinander folgen, ohne dass zwischenzeitlich Zündvorgänge in der zweiten Gruppe stattfinden, und dass die Zündvorgänge in den einzelnen Zylindern der zweiten Gruppe sequentiell aufeinander folgen, ohne dass zwischenzeitlich Zündvorgänge in der ersten Gruppe stattfinden,
- Erfassen eines verbrennungsbedingten Signals,
- Bestimmen einer Komponente des erfassten verbrennungsbedingten Signals, die eine Periodizität des Motortaktes aufweist, und
- Bestimmen des Amplitudenwertes dieser Komponente, wobei
- ein Fehler in dem Nockenprofilumschaltsystem erfasst wird, falls die Amplitude einen Schwellwert überschreitet.

**2.** Verfahren nach Anspruch 1, **dadurch gekennzeichnet, dass** eine fehlerhafte einzelne Bank identifiziert wird, wobei eine fehlerhafte einzelne Bank einem Fehler entspricht, der alle Ventile betrifft, die von dem ersten oder dem zweiten Umschaltmittel gesteuert werden, welches der fehlerhaften einzelnen Bank zugeordnet ist.

**3.** Verfahren nach Anspruch 1, **dadurch gekennzeichnet, dass** ein fehlerhafter einzelner Zylinder identifiziert wird, wobei ein fehlerhafter einzelner Zylinder einem Fehler entspricht, der alle Ventile betrifft, die von dem ersten oder dem zweiten Umschaltmittel gesteuert werden, welches dem fehlerhaften einzelnen Zylinder zugeordnet ist.

**4.** Verfahren nach einem der Ansprüche 1 bis 3, **dadurch gekennzeichnet, dass** ein Phasenwinkel der Komponente in Bezug auf ein Umdrehungszählwerk bestimmt wird, und dass der Phasenwinkel verwendet wird, um zu bestimmen welches der ersten und zweiten Umschaltmittel fehlerhaft ist.

**5.** Verfahren nach einem der Ansprüche 1 bis 4, **dadurch gekennzeichnet, dass** ein Phasenwinkel der Komponente in Bezug auf ein Umdrehungszählwerk bestimmt wird, und dass der Phasenwinkel verwendet wird, um zu bestimmen, welcher einzelne Zylinder fehlerhaft ist.

**6.** Verfahren nach Anspruch 5, **dadurch gekennzeichnet, dass** ein fehlerhaftes Ventil bestimmt wird, wobei ein fehlerhaftes Ventil einem Fehler entspricht, der ein einzelnes Ventil betrifft, das von dem ersten oder dem zweiten Umschaltmittel gesteuert wird, welches dem fehlerhaften einzelnen Zylinder zugeordnet ist.

**7.** Verfahren nach Anspruch 6, **dadurch gekennzeichnet, dass** die Amplitude verwendet wird, um zu bestimmen, ob ein oder mehrere Ventile fehlerhaft sind.

**8.** Verfahren nach einem der vorangehenden Ansprüche, **dadurch gekennzeichnet, dass** das verbrennungsbedingte Signal durch das Motordrehzahlsignal gegeben ist.

**9.** Verfahren nach einem der Ansprüche 1 bis 8, **dadurch gekennzeichnet, dass** das verbrennungsbedingte Signal durch das Ansaugrohrdrucksignal gegeben ist.

**10.** Verfahren nach einem der vorangehenden Ansprüche, **dadurch gekennzeichnet, dass** die Periodizität des Motortaktes 720° Kurbelwinkel beträgt.

**11.** Verfahren nach einem der vorangehenden Ansprüche, **dadurch gekennzeichnet, dass** die Amplitude bestimmt wird als Differenz zwischen dem Maximum und dem Minimum des verbrennungsbedingten Signals innerhalb eines Rahmens, der einer Motortaktperiodizität entspricht.

**12.** Verfahren nach Anspruch 11, **dadurch gekennzeichnet, dass** das Minimum als derjenige Signalwert des verbrennungsbedingten Signals bestimmt wird, der $360°(1 - 1/N)$ vor dem Maximum des verbrennungsbedingten Signals liegt, wobei N gleich der Anzahl der Zylinder ist.

**13.** Verfahren nach Anspruch 11 oder 12, **dadurch gekennzeichnet, dass** ein flaches Nockenprofil angewendet wird auf diejenigen Zylinder, in denen eine Verbrennung stattfindet im Intervall zwischen dem Minimum des verbrennungsbedingten Signals und dem darauf folgenden Maximum des verbrennungsbedingten Signals, welches $360°(1 - 1/N)$ nach dem Minimum liegt, wobei N gleich der Anzahl der Zylinder ist.

## Revendications

**1.** Procédé de détection d'un défaut dans un système de basculement de profil de came agencé sur un moteur à combustion interne comportant un nombre pair de cylindres formant deux groupes séparés de cylindres, des premiers moyens de basculement (22, 17) chargés de réaliser un basculement de profil de came sur le premier groupe de cylindres (1, 2, 4) et des seconds moyens de basculement (23, 17) chargés de réaliser un basculement de profil de came sur le second groupe de cylindres (3, 5, 6), ledit procédé comportant les étapes consistant à :

- organiser une séquence d'allumage de telle sorte que des allumages dans les cylindres individuels du premier groupe se suivent séquentiellement les uns après les autres sans allumage intercalé dans le second groupe et que des allumages dans les cylindres individuels du second groupe se suivent séquentiellement les uns après les autres sans allumage intercalé dans le premier groupe,
- détecter un signal associé à une combustion,
- déterminer une composante du signal détecté associé à une combustion qui a une périodicité de cycle moteur, et
- déterminer la valeur d'amplitude de ladite composante,

dans lequel un défaut dans le système de basculement de profil de came est détecté dans l'éventualité où ladite amplitude dépasse une valeur de seuil.

**2.** Procédé selon la revendication 1, **caractérisé en ce qu'**une rangée individuelle défectueuse est identifiée, où une rangée individuelle défectueuse correspond à un défaut qui affecte toutes les soupapes commandées par les premiers ou seconds moyens de basculement associés à la rangée individuelle défectueuse.

**3.** Procédé selon la revendication 1, **caractérisé en ce qu'**un cylindre individuel défectueux est identifié, où un cylindre individuel défectueux correspond à un défaut qui affecte toutes les soupapes commandées par les premiers ou seconds moyens de basculement associés au cylindre individuel défectueux.

**4.** Procédé selon l'une quelconque des revendications 1 à 3, **caractérisé en ce qu'**un angle de phase de ladite composante par rapport à un compteur de vilebrequin est déterminé, et que l'angle de phase est utilisé pour déterminer lequel parmi les premiers et seconds moyens de basculement est défectueux.

**5.** Procédé selon l'une quelconque des revendications 1 à 4, **caractérisé en ce qu'**un angle de phase de ladite composante par rapport à un compteur de vilebrequin est déterminé, et que l'angle de phase est utilisé pour déterminer quel cylindre individuel est défectueux.

6. Procédé selon la revendication 5, **caractérisé en ce qu'**une soupape défectueuse est détectée, où une soupape défectueuse correspond à un défaut qui affecte une seule soupape commandée par les premiers ou seconds moyens de basculement associés à un cylindre individuel défectueux.

7. Procédé selon la revendication 6, **caractérisé en ce que** ladite amplitude est utilisée pour déterminer si une ou plusieurs soupapes individuelles sont défectueuses.

8. Procédé selon l'une quelconque des revendications précédentes, **caractérisé en ce que** ledit signal associé à une combustion est constitué par le signal de régime moteur.

9. Procédé selon l'une quelconque des revendications 1 à 8, **caractérisé en ce que** ledit signal associé à une combustion est constitué par le signal de pression de tubulure d'admission.

10. Procédé selon l'une quelconque des revendications précédentes, **caractérisé en ce que** la périodicité de cycle moteur est égale à un angle de vilebrequin de 720°.

11. Procédé selon l'une quelconque des revendications précédentes, **caractérisé en ce que** ladite amplitude est déterminée comme la différence entre la valeur maximale et la valeur minimale du signal associé à une combustion dans un intervalle correspondant à une périodicité de cycle moteur.

12. Procédé selon la revendication 11, **caractérisé en ce que** la valeur minimale déterminée comme la valeur de signal du signal associé à une combustion qui est positionné $360° \left(1 - \dfrac{1}{N}\right)$ avant la valeur maximale du signal associé à une combustion, où N est égal au nombre de cylindres.

13. Procédé selon la revendication 11 ou 12, **caractérisé en ce qu'**un petit profil de came est appliqué aux cylindres sur lesquels une combustion se produit dans l'intervalle entre la valeur minimale du signal associé à une combustion et une valeur maximale consécutivement suivante du signal associé à une combustion positionné $360° \left(1 - \dfrac{1}{N}\right)$ après la valeur minimale, où N est égal au nombre de cylindres.

*FIG.1*

15

FIG.2

FIG.3

FIG. 4

FIG.5

FIG.6

EP 1 580 407 B1

FIG.7

FIG.8

FIG.9

FIG. 10

FIG. 11

FIG.12

FIG.13

FIG. 14

FIG. 15

FIG. 16

*FIG. 17*

FIG.18

FIG.21

FIG.20

FIG.19

FIG.22

2nd set ————————|5|———————|3|——————|6|——————————————————————|5|——

1st set ————|1|————————————————————|2|———————|4|——————|1|————————

```
        |        |        |        |        |        |        |        |
        0       120      240      360      480      600      720      840
```

[ CA ]

FIG. 23

FIG. 24

2nd set ————————————|6|———|2|——|4|—————————

1st set ——|1|———|5|———|3|————————————|1|———|5|—

0    120    240    360    480    600    720    840

[CA]

## FIG.25

EP 1 580 407 B1

FIG. 26

38

2nd set ———————————————————|3|———————|6|———————|2|———————————————————

1st set ——————|1|————————|5|——————————————————————————————|4|———————|1|———————|5|—

0    120    240    360    480    600    720    840

[CA]

EP 1 580 407 B1

_FIG.27_